Europäisches Patentamt

European Patent Office

Office européen des brevets

(11) Publication number: **0 243 917**
**B1**

(12) **EUROPEAN PATENT SPECIFICATION**

(45) Date of publication of patent specification: **29.08.90**    (51) Int. Cl.⁵: **G 21 C 3/32**

(21) Application number: **87106066.1**

(22) Date of filing: **25.04.87**

(54) **Nuclear fuel assembly.**

(30) Priority: **29.04.86 SE 8601982**

(43) Date of publication of application:
**04.11.87 Bulletin 87/45**

(45) Publication of the grant of the patent:
**29.08.90 Bulletin 90/35**

(84) Designated Contracting States:
**CH DE IT LI SE**

(56) References cited:
**SE-B- 421 969**
**SE-B- 423 760**
**SE-B- 426 428**
**SE-B- 431 691**
**SE-B- 433 986**
**US-A-4 585 614**

(73) Proprietor: **AB ASEA-ATOM**
**S-721 83 Västeras (SE)**

(72) Inventor: **Nylund, Olov**
**Box 17051 Ragnaröksgatan 17**
**S-720 17 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

# Description

The invention relates to a nuclear fuel assembly according to the precharacterising part of Claim 1.

A nuclear fuel assembly for a boiling water reactor comprises several vertical fuel rods arranged in sub-bundles each fuel rod consisting of a stack of pellets of nuclear fuel enclosed within the cladding tube. Also individual vertical water-filled rods may be contained within the nuclear fuel assembly. The fuel rods are surrounded by a fuel channel, which may be of square cross-section. The bundles of fuel rods in the fuel assembly are separated from each other by a channel-formed support member of substantially cruciform cross-section.

From, for example, EP—B—0 036 142, US—A—4,578,241, and EP—A—0099323, fuel assemblies with a channel-formed support member having a square cross-section are known. In the above-mentioned fuel assemblies with a substantially square cross-section, it has been found to be advantageous to separate sub-bundles of the symmetrically arranged fuel rods by a cruciform support member connected to the fuel channel. In addition, to improved reactive effects, when the square channel-formed support member is filled with moderator water, this also provides an improved design from the view point of strength. If the channel-formed support member is connected to the walls of the fuel channel, a light and sturdy design is obtained, which is simple to manufacture.

From SE—B—423760 (corresponding to US—A—4585614 published on 29.04.86 which is priority date of this application) there is further known a nuclear fuel assembly for a boiling water reactor, wherein the corners of the fuel from of at least one sub bundle may be bevelled or rounded off to a greater extent than in the conventional design.

The invention aims at developing a nuclear fuel assembly of the above-mentioned kind, which holds more non-boiling water in the central parts of a nuclear fuel assembly.

To achieve this aim the invention discloses a nuclear fuel assembly according to the introductory part of Claim 1, which is characterized by the features of the characterizing part of Claim 1.

Further developments of the invention are characterized by the features of the additional claims.

In relation to prior designs of nuclear fuel assemblies with sub-bundles of fuel rods and a channel-formed support member of cruciform cross-section, the invention with its enlarged cruciform centre entails considerable advantages. By enlarging the cruciform centre of the channel-formed support member, more non-boiling water may be contained within the central part of the fuel assembly, which results in improved neutron moderation in this area and in the fuel being utilized in a better way despite the removal of at least one fuel rod in each sub-bundle. In addition to its moderator function, the larger amount of water also has an absorber function which, at a lower temperature than the operating temperature, becomes predominant owing to the higher density of the water in this temperature region. The shut-of margin is improved in the case of a cold reactor because the larger amount of water, contained within the central part of the fuel assembly, reduces the reactivity.

In a sub-bundle, fuel rods with different degrees of enrichment may be asymmetrically arranged. Because the sub-bundles are designed with a removed corner portion, incorrect insertion of a sub-bundle may thus be prevented since the channel-formed support member has an enlarged cruciform centre.

The invention will now be described in greater detail with reference to the accompanying drawings showing—by way of example—in

Figure 1 an embodiment of a fuel assembly according to the invention in a vertical section along the line I—I in Figure 2,

Figure 2 a horizontal section along the line II—II in Figure 1,

Figure 3 a modification of the embodiment shown in Figure 2, the section taken again along the line II—II in Figure 1,

Figure 4 an alternative embodiment of a fuel assembly according to the invention in the same representation as shown in Figures 2 and 3,

Figure 5 an embodiment of a different type of a fuel assembly according to the invention in a vertical section along the line V—V in Figure 6,

Figure 6 a horizontal section of the fuel assembly of Figure 5 taken along the line VI—VI in Figure 5,

Figures 7 and 8 in detail how the channel-formed support member in designed, composed and connected to the fuel channel wall,

Figure 9 a horizontal section of an alternative embodiment of a fuel assembly according to the invention.

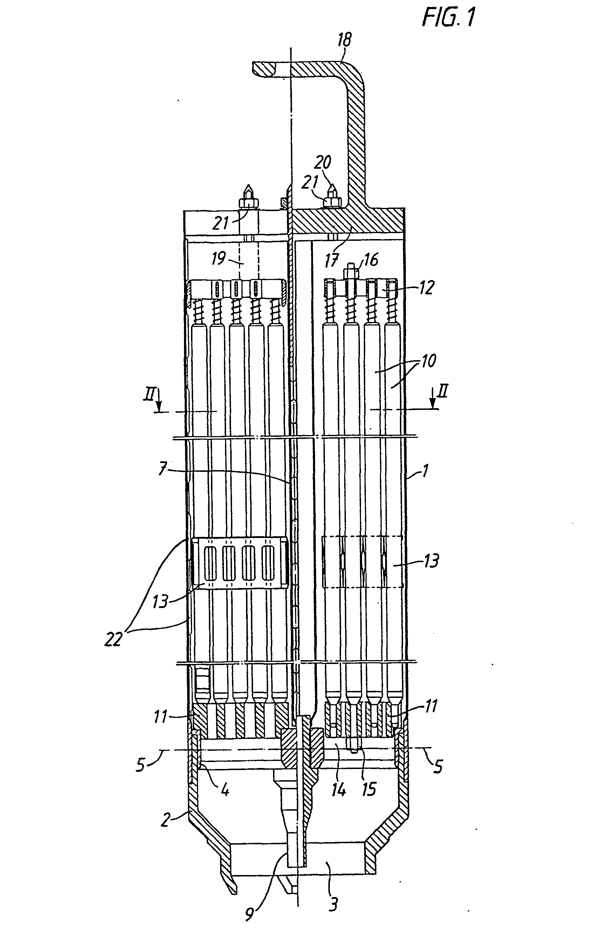

In Figures 1—4, 1 designates a fuel channel of substantially square cross-section. The fuel channel 1 surrounds, with no mentionable play, an upper square portion of a bottom part 2 having a circular, downwardly facing inlet opening 3 for cooling water and moderator water. The bottom part 2 supports a supporting plate 4 in addition to the fuel channel 1. At the bottom the fuel channel 1 has a relatively thick wall portion, which may be fixed to the bottom part 2 and the supporting plate 4 by means of several horizontal bolts, indicated by dash-dotted lines 5. The fuel channel 1 is divided into four vertically extending parts 6 with a hollow, channel-formed support member 7, 8 having a substantially cruciform cross-section and being fixedly connected to the four side walls of the fuel channel 1. The channel-formed support member consists of four hollow wings parts 8 and a hollow, enlarged cruciform central part 7. The channel-formed support member 7, 8 is connected at its bottom to an inlet tube 9 for moderator water. The four vertical parts 6 of the fuel channel 1 each contains a sub-bundle of 24 fuel rods 10. In each sub-bundle the rods 10 are arranged in a symmetrical lattice of 5×5 rod positions with the rod position in the innermost corner of the sub-bundle being removed. Each sub-bundle is arranged with a grid-like bottom tie plate 11, a grid-like top tie plate 12 and a plurality of spacers 13. The fuel channel 1, the channel-formed support member 7, 8 and the spacers 13 may be made of a zirconium alloy such as Zircaloy 4. The four bottom tie plates 11 are supported by the supporting plate 4 and are each partially inserted into a respective square hole 14 therein. In each sub-bundle at least one of the fuel rods 10 may be formed with relative long, threaded end plugs, the lower end plug being passed through the bottom tie plate 11 and being provided with a nut 15 on its end portion protruding from the opposite side of the tie plate 11. Likewise the upper end plug is passed through the top tie plate 12 and is provided with a nut 16.

An upper end portion of the fuel channel 1 surrounds a lifting plate 17, which partially makes contact with the inner wall surface of the fuel channel 1. A lifting handle 18 is connected to the lifting plate 17 and forms together with the plate an integral solid-cast lifting member of steel. The lifting plate 17 is fixed to the channel-formed support member 7, for example by inserting vertical bars 19 into respective wing parts 8 of the support member 7 and fixing them thereto. At its top, each bar 19 has a vertical, bolt-like portion 20, which is passed, with a play, through a corresponding hole in the central portion of the lifting plate 17 and is provided with a nut 21 near its end. As will be clear from Figure 1, the fuel channel 1 may be provided with indentations, intermittently arranged in the longitudinal direction of the fuel channel 1, to which the channel-formed support member 7, 8 is fixedly connected.

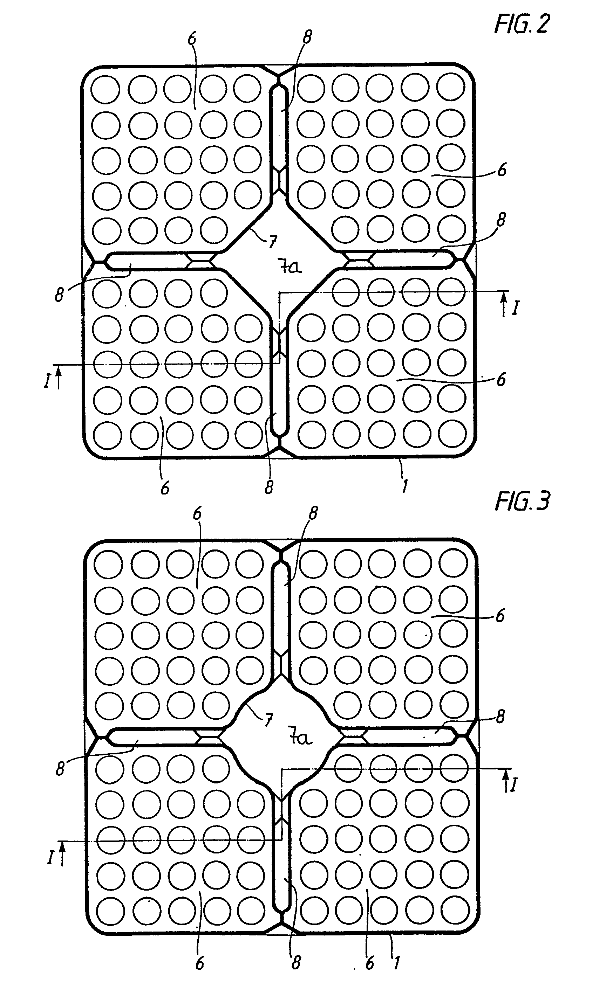

In Figures 2 and 3 the fuel assembly is shown in a horizontal section along the line II—II in Figure 1. The Figures show how the channel-formed support member is provided with an enlarged cruciform center 7a. Each vertically extending channel-formed wing part 8 of the channel-formed support member is intermittently connected, along its outer vertical edge, to the fuel channel 1. Along its inwardly facing vertical edge, the wing part 8 deviates out into the adjacent central parts 7 of the channel-formed support member which conform in shape to the removed corner portion of a sub-bundle. The vertical space 7a between the central parts of the channel-formed support member 7, 8 may be formed as in Figure 2 with a substantially square cross-section with the corners of the square directed towards the wing parts 8, or as in Figure 3 with a substantially circular cross-section. Alternatively, in the case of a square cross-section the sides of the square may be directed towards the wing parts 8.

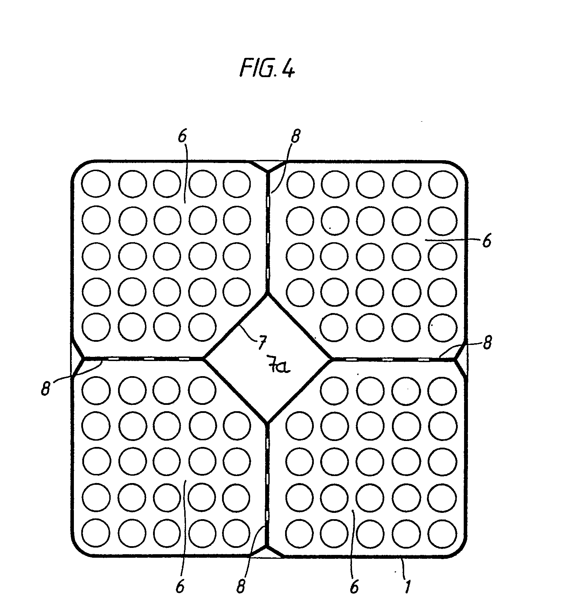

Figure 4 shows a horizontal section through an alternative embodiment of a fuel assembly according to the invention. The wing parts 8 of the channel-formed support member 7, 8 have been formed in this case without a vertical channel and consist of a thin plate with through-holes for horizontal water passage only between the sub-bundles 6. The thin sheet metal plates 8, which are fixedly connected to the fuel channel wall and the central parts 7, which confine the enlarged cruciform center 7a, may be chosen sufficiently strong to absorb the tensile forces arising due to the over-pressure in the fuel assembly. With this design, material is saved while maintaining the strength, which renders the manufacture less expensive.

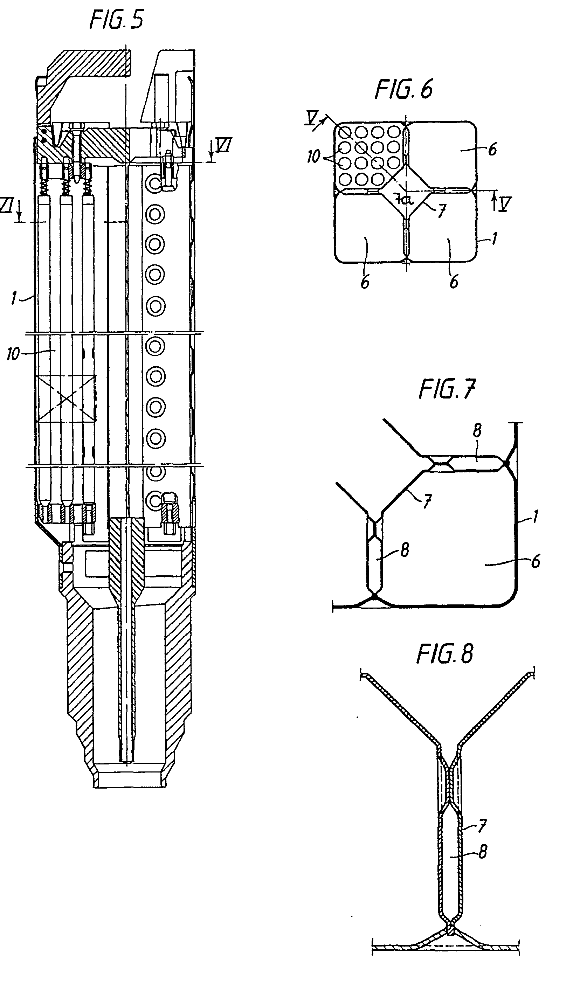

Figures 5 and 6 show an embodiment of a similar type of fuel assembly, in which the fuel channel 1 surrounds four sub-bundles and in which each sub-bundle consists of 15 fuel rods 10. The rods 10 are arranged in a symmetrical lattice of 4×4 rod positions with the rod position in the innermost corner of the sub-bundle being removed. By forming each sub-bundle with a missing inner corner portion, the channel-formed support member may be made with an enlarged cruciform center 7a in the same way as in the embodiment according to Figure 1.

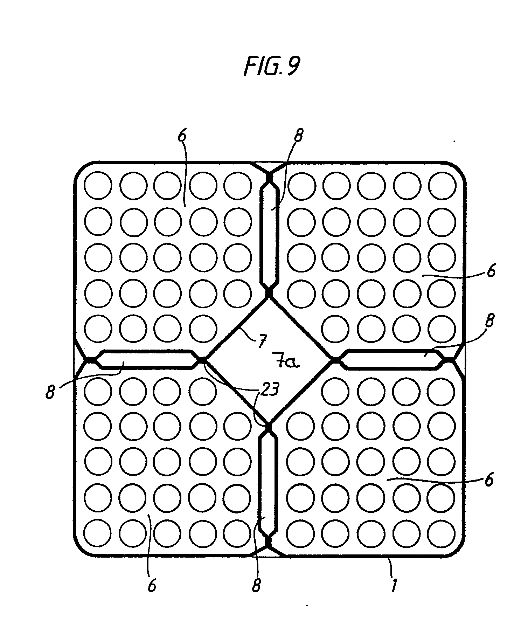

Figures 7 and 8 show, in detailed view, examples of how the channel-formed support member may be formed in a horizontal cross-section 7, 8 each wing part 8 being intermittently fixedly connected to the wall of the fuel channel 1. Towards the centre, prior to the expansion of the support member, the side walls of the wing parts with their indentations are joined together intermittently along the entire channel-formed support member. The surrounding fuel channel 1 with its longitudinal indentations and the enclosed channel-formed support member fixedly connected to the fuel channel 1 together form a unit which constitutes a very strong structure from the view point of strength.

Instead of using indentations in the sheet metal sides of the wing parts for keeping the sheet metal sides spaced apart, spacers connected to the wing parts can be used as well.

In the manufacture of the channel-formed support member of the fuel assembly, the indentations located opposite to each other in the wing parts are joined together, for example by means of spot welding. Unless the material fulfills high demands for conformability, there is a risk of cracks forming during the manufacture of the support member. Because of pressure differences occurring, high local stresses will arise during operation, and under extreme conditions these high local stresses may lead to the occurrence of endurance cracks in the support member. By replacing the indentations by longitudinal folds 23, as shown in Figure 9, the demands on the material are reduced and the forming of the parts and their joining into channel-formed support members can be simplified. The joining together along the longitudinal folds 23 may be made by spot-welding to a sufficient extent with respect to strength but without any requirement for accuracy in the axial position of the weld points. With the longitudinal folds 23 in the channel-formed support members 7, 8, the risk of crack formation during manufacture and the local high stresses during operation are reduced. The welding of the connection of the longitudinal folds 23 may possibly be performed at the same time as the continuous cross edge welding to the fuel channel. In a channel-formed support member with a cruciform cross-section with interconnected longitudinal folds, the water must be supplied separately to the different channels.

## Claims

1. A nuclear fuel assembly for a nuclear boiling water reactor comprising a fuel channel of substantially square cross-section, a plurality of vertical fuel rods arranged in sub-bundles with substantially square cross-section, a vertical channel-formed support member with a center (7a) for the passage of water, said center being connected to wing parts (8) said sub-bundles of fuel rods being surrounded by said fuel channel and spaced apart by the channel-formed support member (7, 8) fixedly connected to the fuel channel (1), the cruciform center (7a) of said support member being limited by the central parts of the channel-formed support member, which conforms to the corner portions of said sub-bundles, in the region between the corner portions of the sub-bundles directed towards the center, characterized in that in each sub-bundle (6) of fuel rods (10) at least one fuel rod position has been removed from the corner portion of the sub-bundle (6) positioned nearest to the center (7a) of the fuel assembly, and that an enlarged cruciform center (7a) is formed by the channel-formed support member (7, 8), shaped in accordance to the non occupied corner portions of the sub-bundles.

2. Nuclear fuel assembly according to Claim 1, characterized in that the enlarged cruciform center (7a) of the channel-formed support member has a square cross-section (Figure 2).

3. Nuclear fuel assembly according to Claim 1, characterized in that the enlarged cruciform center (7a) of the channel-formed support member has a circular cross-section (Figure 3).

4 Nuclear fuel assembly according to any of the preceding claims, characterized in that the wing parts (8) bordering on the enlarged cruciform center (7a) and being fixedly connected to the fuel channel (1), consist of double-sided channel members for vertical passage of water with or without any connection with the space in the cruciform center.

5. Nuclear fuel assembly according to any of Claims 1 to 3, characterized in that the wing parts (8) bordering on the enlarged cruciform center (7a) and being fixedly connected to the fuel channel (1), consist of thin sheet metal plates having horizontal holes for the passage of water between the spaces for the sub-bundles in the fuel assembly.

6. Nuclear fuel assembly according to Claim 4, characterized in that the side walls forming a wing part (8) of the channel-formed support member (7, 8) are connected to each other by means of indentations or longitudinal folds (23), prior to their extension into the central parts (7).

## Patentansprüche

1. Nukleares Brennelementbündel für einen nuklearen Siedewasserreaktor mit einem Brennstoffkanal von im wesentlichen quadratischem Querschnitt, mit einer Vielzahl von vertikalen Brennstäben, die in Teilbündeln mit im wesentlichen quadratischem Querschnitt angeordnet sind, mit einem vertikalen kanalförmige Stützglied mit einem Mittelteil (7a) für den Durchfluß von Wasser, wobei das genannte Mittelteil mit Flügelteilen (8) verbunden ist und die Brennstabteilbündel von dem genannten Brennstoffkanal umgeben sind und durch das kanalförmige Stützglied (7, 8), welches fest mit dem Brennstoffkanal (1) verbunden ist, voneinander auf Abstand gehalten werden, wobei das kreuzförmige Mittelteil (7a) des genannten Stützgliedes durch die zentralen Teile das kanalförmigen Stützgliedes begrenzt wird, welches Stützglied den Eckenabschnitten der genannten Teilbündel angepaßt ist in dem Bereich zwischen den zum Mittelteil gerichteten Eckenabschnitte der Teilbündel, dadurch gekennzeichnet, daß in jedem Brennstabteilbündel (10) mindestens eine Brennstabposition von demjenigen Eckenabschnitt des Teilbündels (6) weggenommen ist, welcher dem Mittelteil (7a) des Brennelementbündels am nächsten liegt, und daß ein erweitertes kreuzförmiges Mittelteil (7a) von dem kanalförmigen Stützglied (7, 8) gebildet wird, welches in Übereinstimmung mit den nicht besetzten Eckenabschnitten der Teilbündel geformt ist.

2. Nukleares Brennelementbündel nach Anspruch 1, dadurch gekennzeichnet, daß das erweiterte kreuzförmige Mittelteil (7a) des kanalförmigen Stützgliedes einen quadratischen Querschnitt hat (Figur 2).

3. Nukleares Brennelementbündel nach Anspruch 1, dadurch gekennzeichnet, daß das erweiterte kreuzförmige Mittelteil (7a) des kanalförmigen Stützgliedes einen kreisförmigen Querschnitt hat (Figur 3).

4. Nukleares Brennelementbündel nach einem der vorhergehenden Ansprüche, dadurch gekennzeichnet, daß die Flügelteile (8), die an den erweiterten kreuzförmigen Mittelteil (7a) angrenzen und fest mit dem Brennstoffkanal (1) verbunden sind, aus einem doppelseitigen Kanalglied für einen vertikalen Durchfluß von Wasser bestehen mit oder ohne Verbindung zu dem Raum im kreuzförmigen Mittelteil.

5. Nukleares Brennelementbündel nach einem der Ansprüche 1—3, dadurch gekennzeichnet, daß die Flügelteile (8), die an den erweiterten kreuzförmigen Mittelteil (7a) angrenzen und fest mit dem Brennstoffkanal (1) verbunden sind, aus dünnen Metallblechplatten bestehen, welche horizontale Löcher für den Übertritt von Wasser zwischen den Räumen der Brennelementbündel aufweisen.

6. Nukleares Brennelementbündel nach Anspruch 4, dadurch gekennzeichnet, daß die Seitenwände, die ein Flügelteil (8) des kanalförmigen Stützgliedes (7, 8) bilden, vor ihrer Erweiterung in die Mittelteile (7) über Vertiefungen oder längsverlaufende Einfaltungen (23) miteinander verbunden sind.

## Revendications

1. Assemblage combustible nucléaire pour un réacteur nucléaire à eau bouillante comprenant un boîtier canal de section transversale sensiblement carrée, plusieurs crayons combustibles verticaux disposés en sous-grappes de section transversale sensiblement carrée, un élément de support vertical en forme de canal ayant un centre (7a) pour le passage de l'eau, ce centre étant relié à des branches (8), les sous-grappes de crayons combustibles étant entourées du boîtier canal et reliées de manière fixe au boîtier canal (1) en étant maintenues à distance les unes des autres par l'élément de support (7, 8) en forme de canal, le centre cruciforme (7a) de l'élément de support étant délimité par les parties centrales de l'élément de support en forme de canal, dont la forme s'adapte au sommet des sous-grappes dans la région comprise entre les sommets des sous-grappes dirigées vers le centre, caractérisé en ce que dans chaque sous-grappe (6) de crayons combustibles (10), au moins une position d'un crayon combustible a été enlevée du sommet de la sous-grappe (6) placée le plus près du centre (7a) de l'assemblage combustible et un centre cruciforme (7a) agrandi et formé par l'élément de support (7, 8) en forme de canal conformé en fonction des sommets inoccupés des sous-grappes.

2. Assemblage combustible nucléaire suivant la revendication 1, caractérisé en ce que le centre cruciforme agrandi (7a) de l'élément de support en forme de canal a une section transversale carrée (Figure 2).

3. Assemblage combustible nucléaire suivant la revendication 1, caractérisé en ce que le centre cruciforme agrandi (7a) de l'élément de support en forme de canal a une section transversale circulare (Figure 3).

4. Assemblage combustible nucléaire suivant l'une quelconque des revendications précédentes, caractérisé en ce que les branches (8) bordant le centre (7a) cruciforme agrandi et relié de manière fixe au boîtier canal (1) consistent en éléments de canal à deux côtés destinés au passage vertical de l'eau avec ou sans liaison avec l'espace du centre cruciforme.

5. Assemblage combustible nucléaire suivant l'une quelconque des revendications 1 à 3, caractérisé en ce que les branches (8) bordant le centre cruciforme agrandi (7a) et relié fixement au boîtier canal (1) consistent en minces plaques de tôle métallique ayant des trous horizontaux pour le passage de l'eau entre les espaces destinés aux sous-grappes de l'assemblage combustible.

6. Assemblage combustible nucléaire suivant la revendication 4, caractérisé en ce que les parois latérales formant une branche (8) de l'élément de support (7, 8) en forme de canal sont reliées les unes aux autres au moyen d'indentation ou de plis longitudinaux (23) avant de s'élargir en leur partie centrale (7).

FIG.1

EP 0 243 917 B1

FIG. 2

FIG. 3

2

## FIG. 4

FIG.5

FIG.6

FIG.7

FIG.8

FIG. 9